# FASCICULE DE BREVET EUROPEEN

(11) **EP 1 227 573 B1**
(45) Date de publication et mention de la délivrance du brevet: **20.04.2011**
(21) Numéro de dépôt: 02001321.5
(22) Date de dépôt: 18.01.2002
(51) Int. Cl.: H02P 8/14

(54) **Commande optimisée d'actionneur de volet d'une installation de climatisation de véhicule automobile**
Optimierte Regelung für den Klappensteller einer Fahrzeugklimaanlage
Optimized flap actuator control of a vehicle air conditioner

(30) Priorité: 25.01.2001 FR 0100988
(43) Date de publication de la demande: 31.07.2002
(73) Titulaire: VALEO SYSTEMES THERMIQUES, 78321 Le Mesnil Saint-Denis Cedex (FR)
(72) Inventeur: Bruzy, Christophe, 78650 Beynes (FR); Richardot, Philippe, 7000 Vesoul (FR)

(56) Documents cités:
- EP-A- 0 242 039
- EP-A- 0 654 892
- US-A- 4 496 891

## Description

### Arrière-plan de l'invention

L'invention concerne les actionneurs de volets de distribution ou de mixage d'air ou de recirculation (entrée d'air) dans les installations de climatisation de véhicules automobiles.

Dans de telles installations, les volets sont mûs par des motoréducteurs en réponse à des ordres d'actionnement produits par une unité centrale de commande en fonction des besoins à satisfaire tels que mise en marche ou arrêt de ventilation, réglage de température ambiante, désembuage, dégivrage, ...

Que ce soit pour répondre le plus rapidement aux besoins ou pour faire face à des situations particulières, par exemple détection de pollution, il est souhaitable de déplacer les volets pour les amener dans la position désirée dans le plus bref délai.

A cet effet, les moteurs des motoréducteurs, généralement des moteurs pas-à-pas sont choisis pour délivrer la puissance nécessaire pour entraîner les volets à vitesse maximale en toutes circonstances, c'est-à-dire quels que soient les fluctuations de la tension d'alimentation et les besoins en couple. Les besoins en couple sont variables non seulement en fonction de la technologie des volets et de la nature de leur cinématique d'entraînement, mais aussi en fonction de conditions instantanées telles que puissance de ventilation, contre-pression exercée sur le volet et s'opposant au mouvement souhaité, température,...

Les motoréducteurs utilisés dans les installations de climatisation connues sont alors surdimensionnés en puissance pour satisfaire les besoins en couple.

### Objets et résumé de l'invention

L'invention a pour but de permettre l'utilisation de motoréducteurs de plus faible puissance que ceux utilisés de façon habituelle aujourd'hui, afin de diminuer les coûts des installations de climatisation, mais tout en satisfaisant les besoins en couple et sans pénaliser de façon sensible la rapidité d'exécution des ordres d'actionnement.

Ce but est atteint, conformément à l'invention, par un procédé de commande de moteur pas-à-pas d'actionneur selon lequel, lors de l'actionnement du volet, on adapte la fréquence de pilotage du moteur pas-à-pas en fonction du besoin en couple délivré par le moteur pour déplacer le volet.

L'adaptation de la fréquence de pilotage peut être réalisée en recueillant en permanence une information représentant le besoin en couple délivré par le moteur pour déplacer le volet, en diminuant, le cas échéant, la fréquence de pilotage en réponse à une augmentation détectée du besoin en couple, et, lorsque la fréquence de pilotage est inférieure à une fréquence maximale prédéterminée, en augmentant, le cas échéant, la fréquence de pilotage en réponse à une diminution détectée du besoin en couple.

Avantageusement, en réponse à un ordre d'actionnement, on commande initialement le fonctionnement du moteur pas-à-pas à la fréquence maximale prédéterminée.

La variation de la fréquence de pilotage peut être réalisée de façon quasi continue en fonction des fluctuations du besoin en couple détecté, ou par paliers, le passage d'un palier à un autre étant commandé en réponse au franchissement d'un seuil par le besoin en couple détecté.

En modulant le cas échéant la fréquence de pilotage, donc la vitesse du moteur pas-à-pas en fonction du besoin en couple, le procédé selon l'invention permet d'optimiser l'utilisation de la puissance disponible. Un surdimensionnement de la puissance, tel qu'il serait nécessaire pour satisfaire des pics de besoin en couple pendant des périodes transitoires lors de la phase de déplacement des volets, devient inutile. Ces périodes transitoires éventuelles représentent rarement plus de 20 % du temps total d'actionnement des volets, de sorte que le ralentissement du moteur pendant ces périodes transitoires éventuelles n'affecte pas sensiblement la durée totale de l'actionnement.

La durée d'actionnement restant réduite, il est possible sans risque d'échauffement excessif de faire fonctionner le moteur pas-à-pas en surpuissance, par application d'une tension d'alimentation correspondant à un mode de fonctionnement en surpuissance. A titre de sécurité, on pourra alors commander l'arrêt du moteur si une température limite d'échauffement est dépassée.

La détection du besoin en couple délivré par le moteur peut être effectuée par mesure d'une grandeur directement ou indirectement représentative du couple telle que mesure de tension sur une phase du moteur, mesure du courant dans un enroulement du moteur ou mesure de la vitesse instantanée de rotation du moteur, un ralentissement en deçà d'une certaine limite traduisant dans ce dernier cas le franchissement d'un seuil de valeur de couple pour la fréquence de pilotage utilisée.

L'invention a aussi pour but de fournir un actionneur permettant la mise en oeuvre du procédé défini ci-avant.

Ce but est atteint grâce à un actionneur de volet comprenant un moteur pas-à-pas d'entraînement du volet, un circuit d'alimentation électrique du moteur, une entrée de commande et une unité de commande reliée à l'entrée de commande et au circuit d'alimentation électrique pour délivrer au moteur pas-à-pas une tension d'alimentation à une fréquence donnée en réponse à un ordre d'actionnement reçu sur l'entrée de commande, actionneur dans lequel, conformément à l'invention :
- des moyens sont prévus pour fournir à l'unité de commande une information représentant le besoin en couple que doit délivrer le moteur pour déplacer le volet, et
- l'unité de commande comprend des moyens pour adapter la fréquence de pilotage du moteur pas-à-pas en fonction de ladite information représentant le besoin en couple.

L'invention a encore pour objet une installation de climatisation de véhicule comprenant au moins un actionneur.

### Brève description des dessins

L'invention sera mieux comprise à la lecture de la description faite ci-après à titre indicatif mais non limitatif en référence aux dessins annexés, sur lesquels :
- la figure 1 illustre très schématiquement les composants d'une installation de climatisation de véhicule automobile ;
- la figure 2 est un schéma d'un mode de réalisation d'un actionneur de volet conforme à l'invention ;
- les figures 3 et 5 illustrent des processus de gestion de vitesse moteur avec un actionneur tel que celui de la figure 2 ;
- les figures 4 et 6 illustrent schématiquement deux modes de réalisation de circuit de détection de besoin en couple pour un actionneur tel que celui de la figure 2 ; et
- la figure 7 illustre graphiquement la variation dans le temps du couple délivré par un moteur pas-à-pas d'actionneur pendant une phase de déplacement d'un volet entre deux positions.

### Description détaillée de modes de réalisation de l'invention

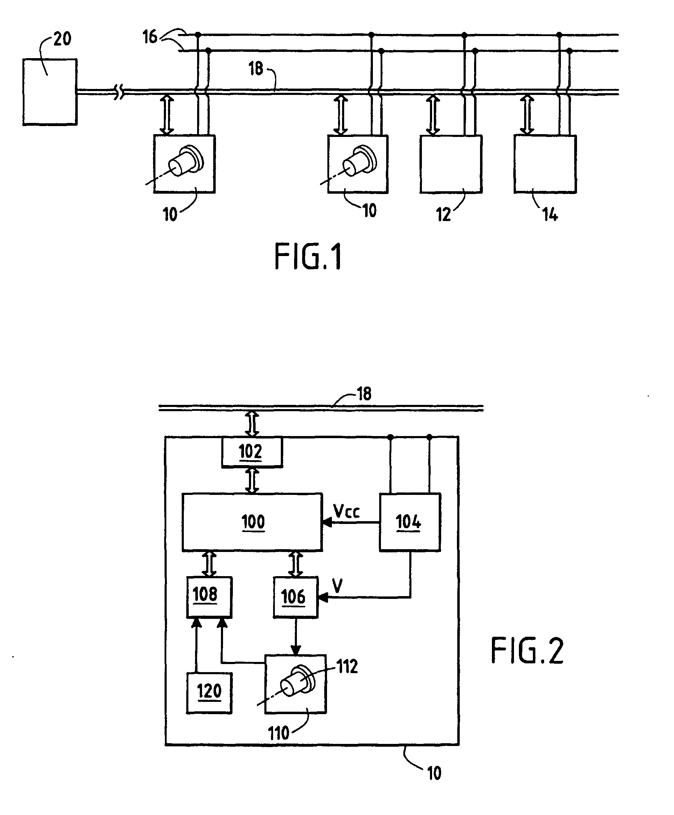

Comme le montre de façon très schématique la figure 1, une installation de climatisation de véhicule automobile comprend classiquement une pluralité d'actionneurs 10 (dont seulement deux sont montrés sur la figure) pour commander le déplacement de volets de distribution et de mixage d'air afin de réaliser des fonctions souhaitées de ventilation, réglage de température d'habitacle, désembuage, dégivrage,... commandées à partir d'un panneau de contrôle 12.

Les actionneurs 10 ainsi que le panneau de commande 12 et des sondes de température 14 sont reliés à un bus d'énergie 16 acheminant la tension de batterie du véhicule ou une tension dérivée de celle-ci, et à une liaison d'informations 18.

En raison de la sophistication des installations de climatisation de véhicules automobiles, qui se traduit par un nombre croissant de composants dans ces installations, et pour éviter le recours à de volumineux faisceaux de fils conducteurs, la liaison 18 est avantageusement constituée par un bus d'informations. Le bus 18 est relié à une unité centrale de commande 20. Celle-ci reçoit des informations d'état provenant du panneau de contrôle 12, des sondes 14 et des actionneurs 10, telles que des informations de position des volets et transmet des informations de commande, notamment des ordres d'actionnement de volets par adressage des actionneurs 10, ceux-ci ayant chacun une adresse spécifique.

Comme le montre plus en détail la figure 2, chaque actionneur 10 comprend une unité de commande 100 à microprocesseur reliée au bus d'informations 18 par une interface de bus 102. Un circuit d'alimentation électrique 104 relié au bus d'énergie 16 comprend des circuits de filtrage, protection et régulation de tension pour délivrer une tension logique d'alimentation V_{cc} à l'unité de commande 100 et une tension d'alimentation moteur V à un circuit d'interface analogique 106. Un motoréducteur 110 couplé à un volet de répartition ou mixage d'air (non représenté) comprend un moteur pas-à-pas 112 qui reçoit du circuit 106 la tension V sous forme de trains d'impulsions appliqués aux phases du moteur à une fréquence de pilotage déterminée, sous la commande de l'unité 100 à laquelle l'interface 106 est reliée. Une interface de données 108 est reliée au motoréducteur 110 et à l'unité de commande 100 pour transmettre à celle-ci des données d'état, notamment des données de position du volet, par exemple indiquant l'arrivée du volet en fin de course.

Une installation de climatisation et un actionneur tels que décrits ci-avant sont connus de l'homme de l'art, de sorte qu'une description plus détaillée n'est pas nécessaire.

Conformément à l'invention, l'actionneur 10 comprend en outre un circuit 120 fournissant une information représentative du besoin en couple délivré par le moteur pas-à-pas 112, pour déplacer le volet, et l'unité de commande 100 est programmée de manière à modifier éventuellement la fréquence de pilotage du moteur 112, et donc la vitesse de celui-ci, en fonction de l'information fournie par le circuit 120 et reçue par l'unité de commande par exemple à travers l'interface de données 108.

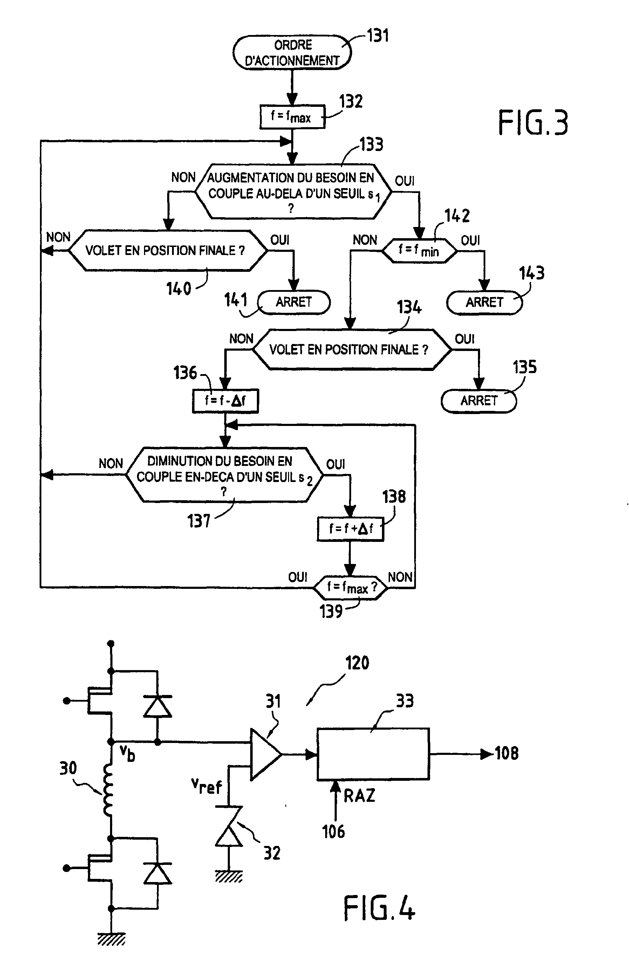

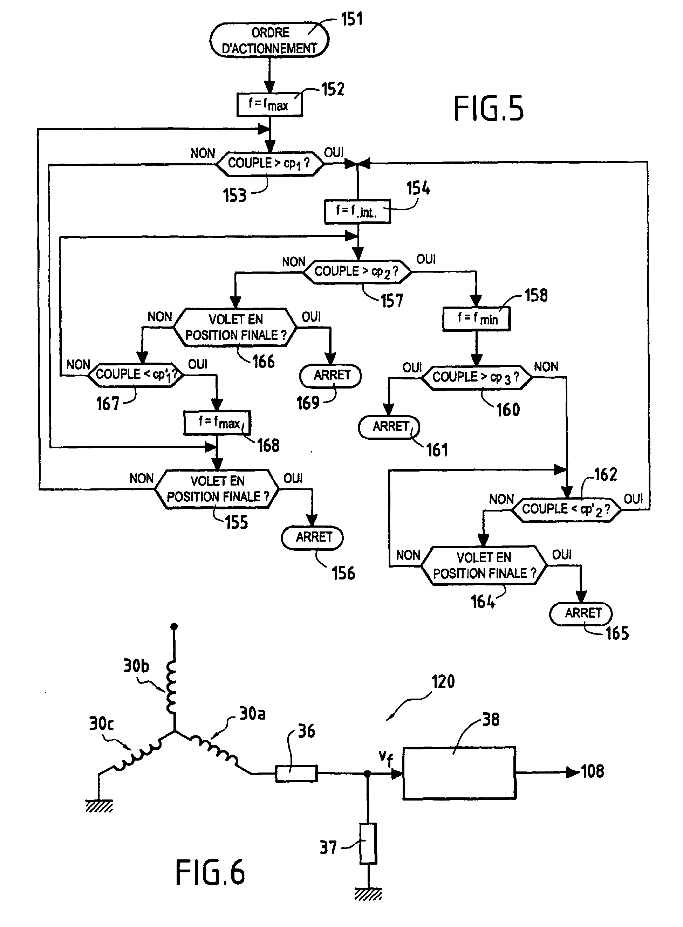

Des modes détaillés de réalisation d'un circuit 120 seront décrits plus loin en référence aux figures 4 et 6.

La fréquence de pilotage est adaptée pendant la durée d'actionnement du volet pour ajuster le couple en fonction des besoins. A une fréquence de pilotage donnée correspond un couple de blocage. Par couple de blocage, on entend ici le couple maximum qui pourra être exigé du moteur pour déplacer le volet. Si le besoin en couple devient plus important, la diminution de la fréquence de pilotage par l'unité 100 permet d'augmenter le couple de blocage. Si ensuite le besoin en couple diminue, la fréquence de pilotage peut être ré-augmentée par l'unité 100, avec diminution correspondante du couple de blocage.

La gestion de la fréquence de pilotage du moteur 112 par l'unité de commande 100 est réalisée par exemple comme suit (figure 3).

En réponse à un ordre d'actionnement reçu à travers l'interface de bus 102 (phase 131), le démarrage du moteur 112 est commandé à une fréquence de pilotage f égale à la fréquence nominale fₘₐₓ, qui est la fréquence de pilotage maximale du moteur (phase 132). La fréquence fₘₐₓ est choisie pour entraîner initialement le moteur en rotation à une vitesse maximale correspondant de préférence à un régime de surpuissance. Par régime de surpuissance, on entend ici un mode de fonctionnement à une puissance supérieure à la puissance nominale du moteur, ce qui est rendu possible par la durée réduite de fonctionnement lors d'une phase d'activation de volet et permet d'optimiser l'utilisation de la puissance disponible.

Lorsqu'il est détecté, à partir de l'information reçue du circuit 120 que le besoin en couple délivré par le moteur 112 augmente au-delà d'un seuil s₁ prédéterminé (test 133), il est examiné si le volet est parvenu en position finale (test 134). Dans l'affirmative, le moteur est arrêté (étape 135) ; sinon, la fréquence de pilotage est diminuée d'un incrément Δf pour passer à la valeur f-Δf (étape 136).

Lorsqu'après passage à la valeur f-Δf, il est détecté une diminution du besoin en couple en deçà d'un seuil prédéterminé s₂ (test 137), la fréquence de pilotage est augmentée de la valeur Δf (étape 138) ; sinon, on retourne au test 133.

Lorsqu'après passage à la valeur f + Δf (étape 138), la valeur fₘₐₓ est atteinte (test 139), on retourne au test 133 ; sinon, on retourne au test 137.

Si le test 133 n'indique pas de franchissement du seuil s₁, on reste à la fréquence fₘₐₓ et on reboucle sur le test 133, si le volet n'est pas arrivé en position finale (test 140), provoquant l'arrêt du moteur (étape 141).

L'arrivée du volet en position finale peut être reconnue par l'unité de commande 100 en réponse à la réception d'une information d'état (par exemple arrivée en butée) correspondant à cette position finale.

Le processus de la figure 3 permet de réaliser une adaptation de la fréquence de pilotage au besoin en couple de façon quasi-continue, en choisissant pour l'incrément Δf une valeur relativement faible. A titre d'exemple, on pourra prévoir une possible excursion de fréquence de pilotage f entre des valeurs de 600 Hz et 1 200 Hz par incréments de 5Hz. Une sécurité pourra être prévue pour arrêter le moteur (étape 143) si une augmentation de besoin en couple est détectée par le test 133 alors que la fréquence de pilotage est à une valeur minimale fₘᵢₙ (test 142).

La figure 4 illustre schématiquement un mode de réalisation d'un circuit 120 de détection de besoin en couple, de type connu en soi, pouvant être utilisé pour la mise en oeuvre du processus de la figure 3.

La tension v_{b} aux bornes d'une bobine 30 du moteur 112 est comparée par un comparateur 31 à une tension de référence v_{ref} fixée par une diode 32. La tension de référence est fixée à une valeur supérieure à la tension normalement présente aux bornes de la bobine 30 lorsque le moteur délivre le couple nominal correspondant à la fréquence à laquelle il est piloté.

Lorsque la tension v_{b} excède v_{ref}, traduisant une augmentation du besoin en couple, le comparateur 31 déclenche un comptage de temps par un compteur 33. La valeur comptée par le compteur 33 constitue l'information transmise à l'unité de commande 100 via l'interface 108.

Le seuil s₁ est fixé à une valeur de temps traduisant la persistance de l'augmentation du besoin en couple.

Lorsque la fréquence f a été diminuée en réponse au dépassement du seuil s₁, le compteur 33 peut être remis à zéro par l'unité de commande 100 via l'interface 106.

Le seuil s₂ est fixé à une valeur de temps inférieure à s₁.

La figure 5 illustre un autre mode de réalisation de la gestion de fréquence de pilotage du moteur, la gestion étant réalisée non pas de façon continue mais par paliers, la fréquence de pilotage pouvant par exemple prendre trois valeurs : maximale fₘₐₓ, intermédiaire fᵢₙₜ et minimale fₘᵢₙ. En reprenant l'exemple précédent d'une excursion possible de fréquence entre 600 et 1 200 Hz, on pourra choisir fₘₐₓ = 1 200 Hz, fᵢₙₜ = 900 Hz et fₘᵢₙ = 600 Hz. En outre, l'information transmise par le circuit 120 est ici représentative de la valeur du couple instantané.

En réponse à un ordre d'actionnement reçu (phase 151), le démarrage du moteur est commandé à la fréquence fₘₐₓ (phase 152).

Si le couple instantané dépasse un premier seuil cp₁ (test 153), la fréquence de pilotage f est diminuée pour passer à la valeur intermédiaire fᵢₙₜ (étape 154) ; sinon, il est détecté si le moteur est parvenu en position finale (test 155) pour, dans l'affirmative, arrêter le moteur (étape 156) ou, dans la négative revenir au test 153.

Après passage à la fréquence fᵢₙₜ, il est détecté si le couple instantané dépasse un second seuil cp₂ (test 157). Si oui, la fréquence est de nouveau diminuée et passe à fₘᵢₙ (étape 158). On détecte alors si le couple dépasse un troisième seuil cp₃ (test 160) afin, le cas échéant, de provoquer un arrêt d'urgence du moteur (étape 161).

Si le seuil cp₃ n'est pas dépassé, il est détecté si le couple instantané devient inférieur à un seuil cp'₂ (test 162). Dans l'affirmative, la fréquence de pilotage est augmentée pour passer à la valeur intermédiaire fᵢₙₜ (phase 154) ; sinon, on recherche si le volet est en position finale (test 164) pour, dans l'affirmative, arrêter le moteur (étape 165) et, dans la négative, retourner au test 162.

Si le test 157 indique que le seuil cp₂ n'est pas dépassé, on recherche si le volet est en position finale (test 166) pour dans l'affirmative, arrêter le moteur (étape 169) et, dans la négative, détecter si le couple devient inférieur à un seuil cp'₁ (test 167). S'il en est ainsi, la fréquence de pilotage est augmentée pour passer à la fréquence fₘₐₓ (phase 168) ; sinon, on retourne au test 157.

Après passage à la fréquence fₘₐₓ, on passe au test 155.

La figure 6 illustre schématiquement un mode de réalisation d'un circuit 120 de détection de besoin en couple, de type connu en soi, pouvant être utilisé pour la mise en oeuvre du processus de la figure 3.

Une tension v, représentative du courant parcourant une bobine 30a, 30b ou 30c du moteur 112 est prélevée au point milieu d'un diviseur de tension formé par deux résistances 36, 37 en série avec une bobine, en l'espèce la bobine 30a. La tension v_{f} est numérisée par un circuit convertisseur A/N 38 et transmise à l'unité de commande 100 via l'interface 108.

La tension v_{f} représente la force contre électromotrice produite lors de la rotation du moteur. Lorsque le moteur ralentit, signe d'une augmentation de couple, la tension v_{f} décroît. Elle est donc inversement proportionnelle au couple délivré par le moteur.

Dans le mode de réalisation de la figure 5, les valeurs cp₁, cp₂, cp₃ sont choisies en fonction des couples de blocage pour les fréquences fₘₐₓ, fᵢₙₜ, fₘᵢₙ, plus précisément un peu inférieures à ces couples de blocage.

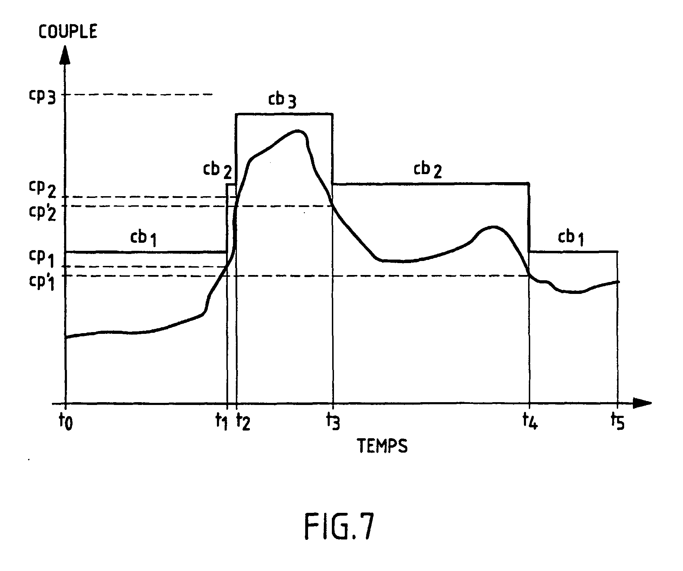

La figure 7 montre une courbe qui représente la variation du couple délivré par un moteur pas-à-pas lors d'un actionnement d'un volet d'entrée d'air. On constate un accroissement momentané du besoin en couple.

Les seuils de couples cp₁, cp₂, cp₃ sont représentés ainsi que les couples de blocage cb₁, cb₂, cb₃ correspondant aux fréquences fₘₐₓ, fᵢₙₜ et fₘᵢₙ.

Les seuils de couple cp'₁ et cp'₂ sont également représentés. Pour éviter une instabilité, on choisira pour cp'₁ et cp'₂ des valeurs légèrement inférieures à celles de cp₁ et cp₂, respectivement.

Le volet est entraîné à vitesse maximale correspondant à fₘₐₓ entre les temps t₀ (démarrage) et t₁ (franchissement de cp₁) et les temps t₄ (franchissement de cp'₁) et t₅ (arrivée du volet en position finale). Entre les temps t₁ et t₂ (franchissement de cp₂) et les temps t₃ (franchissement de cp'₂) et t₄, le volet est entraîné à vitesse intermédiaire correspondant à fᵢₙₜ. Entre les temps t₂ et t₃, le volet est entraîné à vitesse minimale correspondant à fₘᵢₙ.

Bien entendu, le mode de réalisation de la figure 3 pourra être modifié pour piloter la fréquence de pilotage par paliers, tandis que le mode de réalisation de la figure 5 pourra être modifié pour piloter la fréquence de pilotage de façon quasi continue.

## Revendications

1. Procédé de commande de moteur pas-à-pas d'actionneur de volet d'une installation de climatisation de véhicule automobile,
**caractérisé en ce que**, lors de l'actionnement du volet, on recueille en permanence une information représentant le besoin en couple délivré par le moteur pas-à-pas (112) pour déplacer le volet, on diminue, le cas échéant, la fréquence de pilotage en réponse à une augmentation détectée du besoin en couple, et, lorsque la fréquence de pilotage est inférieure à une fréquence maximale prédéterminée, on augmente, le cas échéant, la fréquence de pilotage en réponse à une diminution détectée du besoin en couple.

2. Procédé selon la revendication 1, **caractérisé en ce que**, en réponse à un ordre d'actionnement, on commande initialement le fonctionnement du moteur pas-à-pas à la fréquence maximale prédéterminée.

3. Procédé selon l'une quelconque des revendications 1 et 2, **caractérisé en ce que** l'on fait varier la fréquence de pilotage de façon quasi continue en fonction des fluctuations du besoin en couple détecté.

4. Procédé selon l'une quelconque des revendications 1 et 2, **caractérisé en ce que** l'on fait varier la fréquence de pilotage par paliers, le passage d'un palier à un autre étant commandé en réponse au franchissement d'un seuil par le besoin en couple détecté.

5. Procédé selon l'une quelconque des revendications 1 à 4, **caractérisé en ce que** le moteur est alimenté en mode de surpuissance.

6. Procédé selon l'une quelconque des revendications 1 à 5, **caractérisé en ce que** l'on recueille une information représentant le besoin en couple par détection d'une grandeur représentative du couple instantané délivré par le moteur.

7. Actionneur de volet d'installation de climatisation de véhicule automobile, comprenant un moteur (112) pas-à-pas d'entraînement du volet, un circuit (104) d'alimentation électrique du moteur, une entrée de commande (102) et une unité de commande (100) reliée à l'entrée de commande et au circuit d'alimentation électrique (104) pour délivrer au moteur (112) pas-à-pas une tension d'alimentation à une fréquence donnée en réponse à un ordre d'actionnement reçu sur l'entrée de commande (102), **caractérisé en ce que** :
- des moyens (120) sont prévus pour fournir à l'unité de commande (100) une information représentant le besoin en couple que doit délivrer le moteur (112) pour déplacer le volet, et
- l'unité de commande (100) comprend des moyens pour adapter la fréquence de pilotage du moteur pas-à-pas en fonction de ladite information représentant le besoin en couple.

8. Actionneur selon la revendication 7, **caractérisé en ce que** l'unité de commande (100) comprend des moyens agissant en réponse à la réception de ladite information représentant le besoin en couple, pour diminuer le cas échéant la fréquence de pilotage en réponse à une augmentation détectée du besoin en couple, et, lorsque la fréquence de pilotage est inférieure à une fréquence maximale prédéterminée, pour augmenter le cas échéant la fréquence de pilotage en réponse à une diminution détectée du besoin en couple.

9. Installation de climatisation de véhicule automobile, **caractérisée en ce qu'**elle comprend au moins un actionneur selon l'une quelconque des revendications 7 et 8.

## Claims

1. Method for controlling a step-by-step motor of a flap actuator of a motor vehicle air conditioning unit, **characterised in that**, during the actuating of the flap, information is constantly collected representing the need in torque delivered by the step-by-step motor (112) in order to displace the flap, the control frequency is decreased, where applicable, in response to an increase detected in the torque need, and, when the control frequency is less than a predetermined maximum frequency, the control frequency is increased, where applicable, in response to a decrease detected in the torque need.

2. Method according to claim 1, **characterised in that**, in response to an actuating order, the operating of the step-by-step motor is initially controlled at the predetermined maximum frequency.

3. Method according to any of claims 1 and 2, **characterised in that** the control frequency is varied almost constantly according to the fluctuations in the torque need detected.

4. Method according to any of claims 1 and 2, **characterised in that** the control frequency is varied in stages, with the passing from one stage to another being controlled in response to the crossing of a threshold by the torque need detected.

5. Method according to any of claims 1 to 4, **characterised in that** the motor is powered in over-power mode.

6. Method according to any of claims 1 to 5, **characterised in that** information is collected representing the torque need by the detection of a value representing the instantaneous torque delivered by the motor.

7. Flap actuator of a motor vehicle air conditioning unit, comprising a step-by-step motor (112) for driving the flap, an electrical power circuit (104) of the motor, an control input (102) and a control unit (100) connected to the control input and to the electrical power circuit (104) to deliver to the step-by-step motor (112) a power voltage at a given frequency in response to an actuating order received on the control input (102), **characterised in that**:
- means (120) are provided to provide the control unit (100) with information representing the torque need that the motor (112) must deliver in order to displace the flap, and
- the control unit (100) comprises means to adapt the control frequency of the step-by-step motor according to said information representing the torque need.

8. Actuator according to claim 7, **characterised in that** the control unit (100) comprises means acting in response to the reception of said information representing the torque need, in order to decrease where applicable the control frequency in response to an increase detected in torque need, and, when the control frequency is less than a predetermined maximum frequency, in order to increase where applicable the control frequency in response to a decrease detected in the torque need.

9. Motor vehicle air conditioning unit, **characterised in that** it comprises at least one actuator according to any of claims 7 and 8.

## Patentansprüche

1. Verfahren zur Steuerung eines Schrittmotors eines Betätigungsgerätes der Klappe einer Klimaanlage eines Kraftfahrzeuges,
**dadurch gekennzeichnet, dass** man beim Betätigen der Klappe ständig eine Information sammelt, die den Drehmomentbedarf darstellt, der vom Schrittmotor (112) geliefert wird, um die Klappe zu bewegen, man als Antwort auf eine erkannte Erhöhung des Drehmomentbedarfs gegebenenfalls den Steuerungstakt verringert, und wenn der Steuerungstakt kleiner als ein vorbestimmter maximaler Takt ist, man gegebenenfalls als Antwort auf eine erkannte Verringerung des Drehmomentbedarfs den Steuerungstakt erhöht.

2. Verfahren nach Anspruch 1, **dadurch gekennzeichnet, dass** man als Antwort auf einen Betätigungsbefehl den Betrieb des Schrittmotors mit dem vorbestimmten maximalen Takt steuert.

3. Verfahren nach einem der Ansprüche 1 und 2, **dadurch gekennzeichnet, dass** man den Steuerungstakt in Abhängigkeit von den Schwankungen des erkannten Drehmomentbedarfs quasi kontinuierlich variieren lässt.

4. Verfahren nach einem der Ansprüche 1 und 2, **dadurch gekennzeichnet, dass** man den Steuerungstakt stufenweise variieren lässt, wobei der Übergang von einer Stufe zu einer anderen Stufe in Antwort auf die Überschreitung eines Grenzwertes durch den erkannten Drehmomentbedarf gesteuert wird.

5. Verfahren nach einem der Ansprüche 1 bis 4, **dadurch gekennzeichnet, dass** der Motor in der Betriebsart der Überleistung versorgt wird.

6. Verfahren nach einem der Ansprüche 1 bis 5, **dadurch gekennzeichnet, dass** man eine Information sammelt, die den Drehmomentbedarf durch Erkennung einer Größe darstellt, die repräsentativ für das augenblickliche Drehmoment ist, das vom Motor geliefert wird.

7. Betätigungsgerät der Klappe einer Klimaanlage eines Kraftfahrzeuges umfassend einen Schrittmotor (112) für den Antrieb der Klappe, einen Schaltkreis (104) für die elektrische Versorgung des Motors, einen Steuereingang (102) und eine Steuereinheit (100), die mit dem Steuereingang und dem Schaltkreis für die elektrische Versorgung (104) verbunden ist, um dem Schrittmotor (112) eine Versorgungsspannung mit einem gegebenen Takt zu liefern, und dies als Antwort auf einen Betätigungsbefehl, der am Steuereingang (102) empfangen wird, **dadurch gekennzeichnet, dass**:
- Mittel (120) vorgesehen sind, um der Steuereinheit (100) eine Information zu liefern, die den Drehmomentbedarf darstellt, den der Motor (112) liefern muss, um die Klappe zu bewegen, und
- die Steuereinheit (100) Mittel umfasst, um den Steuerungstakt des Schrittmotors in Abhängigkeit von der Information, die den Drehmomentbedarf darstellt, anzupassen.

8. Betätigungsgerät nach Anspruch 7, **dadurch gekennzeichnet, dass** die Steuereinheit (100) Mittel umfasst, die als Antwort auf den Empfang der Information, die den Drehmomentbedarf darstellt, wirken, um gegebenenfalls den Steuerungstakt als Antwort auf eine erkannte Erhöhung des Drehmomentbedarfs zu verringern, und wenn der Steuerungstakt kleiner als der vorbestimmte maximale Takt ist, um gegebenenfalls den Steuerungstakt als Antwort auf eine erkannte Verringerung des Drehmomentbedarfs zu erhöhen.

9. Klimaanlage eines Kraftfahrzeugs, **dadurch gekennzeichnet, dass** sie zumindest ein Betätigungsgerät nach einem der Ansprüche 7 und 8 umfasst.
